# EUROPEAN PATENT APPLICATION

(11) **EP 4 047 705 A1**
(43) Date of publication of application: **24.08.2022**
(21) Application number: 22155020.5
(22) Date of filing: 03.02.2022
(51) Int. Cl.: H01M 10/04, H01M 10/0525, H01M 10/0587, H01M 50/10

(54) **SECONDARY BATTERY**

(30) Priority: 22.02.2021 JP 2021026203
(71) Applicant: Prime Planet Energy & Solutions, Inc., Chuo-ku Tokyo 103-0022 (JP)
(72) Inventor: KAWAMURA, Atsushi, Tokyo, 103-0022 (JP); YAMADA, Tomoyuki, Tokyo, 103-0022 (JP); TSUSHIMA, Tatsuya, Tokyo, 103-0022 (JP); HOSOKAWA, Takashi, Tokyo, 103-0022 (JP)
(74) Representative: Kuhnen & Wacker Patent- und Rechtsanwaltsbüro PartG mbB

(57) **Abstract**

According to the present disclosure, a secondary battery capable of more appropriately inhibiting precipitation of metallic lithium is provided. The secondary battery disclosed herein includes a flat wound electrode body. The wound electrode body has a pair of curved portions, and a flat portion. A positive electrode starting end portion inside the wound electrode body has a first region extending along the flat portion. On the other hand, a negative electrode starting end portion inside the wound electrode body has a second region extending along the flat portion, a folded portion folded back from an end portion of the second region, and a third region extending from an end portion of the folded portion along the flat portion. In addition, the wound electrode body has an electrode starting end stacked portion in which the first region, the second region, and the third region overlap each other. According to such a configuration, it is possible to prevent a partial pressing failure from occurring in the flat portion and inhibit the precipitation of metallic lithium.

## Description

### BACKGROUND

### 1. Technical Field

The present disclosure relates to a secondary battery.

### 2. Description of the Related Art

A secondary battery such as a lithium ion secondary battery has an electrode body including a pair of electrode plates (a positive electrode plate and a negative electrode plate). As an example of such an electrode body, a wound electrode body in which elongated band-shaped positive and negative electrode plates are wound with a separator interposed therebetween can be exemplified. In such a wound electrode body, one end portions (starting end portions) of each electrode plate are disposed on an inner side of the electrode body, and the other end portions (terminating end portions) are disposed on an outer side of the electrode body. Further, an outer shape of this type of wound electrode body may be formed into a flat shape. The flat-shaped wound electrode body has a pair of curved portions each having a curved outer surface and a flat portion having a flat outer surface connecting the pair of curved portions.

JP2019-169353 discloses an example of a secondary battery including the flat-shaped wound electrode body. In the secondary battery described in JP2019-169353, a winding inner end (a positive electrode starting end portion) of a positive electrode and a winding inner end (a negative electrode starting end portion) of a negative electrode are disposed on an inner side of a flat portion of the wound electrode body. In addition, the winding inner end of the negative electrode has an extension portion extending toward the curved portion side from the winding inner end of the positive electrode, and the extension portion of the negative electrode is folded back within a range in which it does not overlap the positive electrode. According to the secondary battery described in JP2019-16935, since a variation in thickness of the flat portion of the electrode body is inhibited, the electrode body can be easily housed in a battery case. Further, since a variation in distance between the positive electrode and the negative electrode (inter-electrode distance) can also be inhibited, it also has the effect of inhibiting precipitation of metallic lithium (metal Li) due to bias of a charge and discharge reaction.

### SUMMARY

Incidentally, in recent years, there has been an increasing demand for improving durability and a life span of a secondary battery, and there is a demand for a technique capable of more appropriately inhibiting the precipitation of metallic lithium. The present disclosure has been made in view of such demands, and an object thereof is to provide a secondary battery capable of appropriately inhibiting precipitation of metallic lithium.

In order to achieve the object, the technique disclosed herein provides a secondary battery having the following configuration.

A secondary battery disclosed herein includes a flat wound electrode body in which a positive electrode plate and a negative electrode plate are wound with a separator interposed therebetween, and a battery case that houses the wound electrode body. The wound electrode body of the secondary battery includes a pair of curved portions each having a curved outer surface and a flat portion having a flat outer surface connecting the pair of curved portions, one end portion of the positive electrode plate in a longitudinal direction thereof is disposed as a positive electrode starting end portion on an inner side of the wound electrode body, the other end portion thereof is disposed as a positive electrode terminating end portion on an outer side of the wound electrode body, one end portion of the negative electrode plate in the longitudinal direction is disposed as a negative electrode starting end portion on the inner side of the wound electrode body, and the other end portion thereof is disposed as a negative electrode terminating end portion on the outer side of the wound electrode body. In addition, in the secondary battery disclosed herein, the positive electrode starting end portion includes a first region extending along the flat portion, the negative electrode starting end portion includes a second region extending along the flat portion, a folded portion folded back from an end portion of the second region along the curved portion, and a third region extending along the flat portion from an end portion of the folded portion, and the wound electrode body includes an electrode starting end stacked portion in which the first region, the second region, and the third region overlap each other in a thickness direction thereof.

The secondary battery of this type is usually used in a state in which the flat portion of the wound electrode body is pressed from the outside of the battery case to reduce a distance between the positive electrode plate and the negative electrode plate (an inter-electrode distance) inside the electrode body. However, in the flat-shaped wound electrode body, a region which has a smaller number of layers of sheet-shaped members (the positive electrode plate, the negative electrode plate, and the separator) and is thinner than other regions may be generated in the flat portion near the curved portions. In this case, since pressing failure occurs in a part of a surface of the flat portion, there is a possibility of precipitation of metal Li being promoted due to a local increase in the inter-electrode distance. On the other hand, in the secondary battery disclosed herein, the negative electrode plate (negative electrode starting end portion) is folded back to be along the curved portion, and the electrode starting end stacked portion in which the first region of the positive electrode plate, the second region of the negative electrode plate, and the third region of the negative electrode plate overlap each other is formed. This prevents pressing failure from occurring in the flat portion near the curved portions, and thus precipitation of metal Li due to a local increase in the inter-electrode distance can be inhibited.

In one aspect of the secondary battery disclosed herein, a length of the electrode starting end stacked portion in the longitudinal direction of the positive electrode plate is 0.5 mm to 10 mm. This more appropriately prevents partial pressing failure in the flat portion, and thus can improve Li precipitation resistance more appropriately.

In one aspect of the secondary battery disclosed herein, a plurality of wound electrode bodies are housed in the battery case. The local increase in the inter-electrode distance due to the partial pressing failure described above may occur in each of the plurality of wound electrode bodies. For this reason, the technique disclosed herein can be appropriately applied to a high-capacity secondary battery including a plurality of wound electrode bodies.

Also, in the aspect including the plurality of wound electrode bodies, each of the plurality of wound electrode bodies preferably has a different length of the electrode starting end stacked portion in the longitudinal direction of the positive electrode plate. This can contribute to a uniform surface pressure distribution in the flat portion of each wound electrode body when all of the plurality of wound electrode bodies are simultaneously pressed from the outside of the battery case.

In one aspect of the secondary battery disclosed herein, the positive electrode starting end portion is disposed at a position closer to one curved portion of the pair of curved portions, and the positive electrode terminating end portion is disposed at a position closer to the other curved portion than the positive electrode starting end portion. This prevents bias in thickness due to the positive electrode starting end portion and the positive electrode terminating end portion being closer to each other and thus can contribute to a uniform surface pressure distribution in the flat portion. Further, in such an aspect, at least one of the positive electrode terminating end portion and the negative electrode terminating end portion is preferably disposed in the other curved portion. This prevents a step from being generated on the surface of the flat portion of the wound electrode body and thus can further contribute to the uniform surface pressure distribution in the flat portion.

In one aspect of the secondary battery disclosed herein, the separator includes a porous base material layer made of a resin, and a porous surface layer that is formed on a surface of the porous base material layer and contains ceramic particles and a binder. In such an aspect, a porosity of the porous surface layer in a region not facing the negative electrode plate and the positive electrode plate is preferably 30% to 60%. The separator having the porous surface layer having the porosity in the range of 30% to 60% can be deformed to be crushed during press-molding of the wound electrode body and can be caused to function as a cushioning material that absorbs a variation in thickness of the wound electrode body. For this reason, by using the separator having the porous surface layer having the porosity, it is possible to prevent a step from being generated on the surface of the flat portion of the wound electrode body, which can contribute to the uniform surface pressure distribution in the flat portion accordingly. In addition, the porosity of the porous surface layer of the separator before press-molding can be examined by measuring the porosity of the porous surface layer in the region not facing the negative electrode plate and the positive electrode plate.

Also, in the aspect using the separator having the porous surface layer, a thickness of the porous base material layer in the separator interposed between the positive electrode plate and the negative electrode plate is preferably equal to or less than 60% of a thickness of the porous base material layer in the region not facing the negative electrode plate and the positive electrode plate. By performing press-molding such that the thickness of the porous base material layer after pressing is equal to or less than 60% of that before pressing, the variation in the thickness of the wound electrode body can be appropriately absorbed.

In one aspect of the secondary battery disclosed herein, the wound electrode body is produced by winding a stacked body in which a first separator, the negative electrode plate, a second separator, and the positive electrode plate are stacked in order. Further, in such an aspect, it is preferable that a first extension portion extending from the negative electrode starting end portion be formed at one end portion of the first separator in the longitudinal direction, and a second extension portion extending from the negative electrode starting end portion be formed at one end portion of the second separator in the longitudinal direction. This makes a surface pressure distribution in the entire flat portion uniform and thus can improve the Li precipitation resistance in the entire surface of the flat portion.

Also, in the aspect of forming the first extension portion and the second extension portion, each of the first extension portion and the second extension portion is preferably folded back along at least one of the pair of curved portions to form a separator stacked portion in which only the first separator and the second separator are stacked. This makes the surface pressure distribution in the flat portion more uniform and thus can further improve the Li precipitation resistance.

Also, in the aspect of forming the separator stacked portion, it is preferable that the first separator be stacked in three or more layers and the second separator be stacked in two or more layers in the separator stacked portion. This can make the surface pressure distribution in the flat portion more uniform.

Also, in the aspect including the first separator and the second separator, an adhesive layer is preferably provided on at least one surface of each of the first separator and the second separator. This can prevent a positional deviation of the separators from occurring inside the wound electrode body. Further, in such an aspect, a mesh-shaped protruding portion is preferably formed on a surface of the adhesive layer in a plan view. This causes the adhesive layer to easily deform during press-molding and thus the variation in the thickness of the wound electrode body can be absorbed.

In one aspect of the secondary battery disclosed herein, the separator is interposed between the second region and the third region of the negative electrode starting end portion, and a distance between the second region and the third region in the thickness direction of the wound electrode body is smaller than a thickness of the negative electrode plate. By reducing a gap between the second region and the third region in this way, a constituent pressure applied to the electrode body can be made uniform.

Also, in the aspect in which the separator is interposed between the second region and the third region, a value obtained by subtracting the total thickness of the separator interposed between the second region and the third region from the distance between the second region and the third region in the thickness direction of the wound electrode body is preferably 50 µm or less. This can further reduce the gap between the second region and the third region. Further, in such an aspect, three or more layers of separators are preferably interposed between the second region and the third region of the negative electrode starting end portion.

In one aspect of the secondary battery disclosed herein, the positive electrode plate includes a positive electrode core body that is a band-shaped metal foil, and a positive electrode active material layer applied to a surface of the positive electrode core body, and the negative electrode plate includes a negative electrode core body that is a band-shaped metal foil, and a negative electrode active material layer applied to a surface of the negative electrode core body. In such an aspect, it is preferable that a positive electrode tab group including stacked positive electrode tabs with the positive electrode core body exposed be formed at one end portion of the wound electrode body in a winding axis direction thereof, and a negative electrode tab group including stacked negative electrode tabs with the negative electrode core body exposed be formed at the other end portion of the wound electrode body in the winding axis direction. This increases a volume of a charge and discharge region with respect to an internal capacity of the battery case and thus can contribute to improvement of battery performance.

Also, in the aspect including the positive electrode active material layer, a width dimension of the positive electrode active material layer is preferably 200 mm to 400 mm. The technique disclosed herein can be particularly appropriately used in the secondary battery including the wound electrode body having such a dimension.

In one aspect of the secondary battery disclosed herein, a height dimension of the wound electrode body is 60 mm to 120 mm. The technique disclosed herein can be particularly appropriately used in the secondary battery including the wound electrode body having such a dimension.

In one aspect of the secondary battery disclosed herein, the thickness of the wound electrode body is 5 mm to 25 mm. The technique disclosed herein can be particularly appropriately used in the secondary battery including the wound electrode body having such a dimension.

A proportion of a thickness of the positive electrode plate to a thickness of the negative electrode plate is 65% to 95%. As a result, an effect of obtaining the optimum electrode body thickness and constituent pressure can be obtained.

### BRIEF DESCRIPTION OF THE DRAWINGS

FIG. 1 is a perspective view schematically showing a secondary battery according to one embodiment;
FIG. 2 is a schematic vertical cross-sectional view along line II-II in FIG. 1;
FIG. 3 is a schematic vertical cross-sectional view along line III-III in FIG. 1;
FIG. 4 is a schematic cross-sectional view along line IV-IV in FIG. 1;
FIG. 5 is a perspective view schematically showing an electrode body attached to a sealing plate;
FIG. 6 is a perspective view schematically showing an electrode body to which a positive electrode second current collecting unit and a negative electrode second current collecting unit are attached;
FIG. 7 is a schematic view showing a configuration of a wound electrode body of the secondary battery according to one embodiment;
FIG. 8 is a front view schematically showing the wound electrode body of FIG. 7;
FIG. 9 is a schematic vertical cross-sectional view along line IX-IX in FIG. 8;
FIG. 10 is a schematic vertical cross-sectional view of a wound electrode body of a secondary battery according to another embodiment;
FIG. 11 is a schematic vertical cross-sectional view of a wound electrode body of a secondary battery according to yet another embodiment;
FIG. 12 is a schematic vertical cross-sectional view showing the vicinity of a curved portion of a conventional wound electrode body;
FIG. 13 is a schematic cross-sectional view showing the vicinity of a curved portion of a conventional wound electrode body;
FIG. 14 is a photograph of a pressure-sensitive paper showing results of evaluating a surface pressure distribution of Sample 1;
FIG. 15 is a photograph of a pressure-sensitive paper showing results of evaluating the surface pressure distribution of Sample 2;
FIG. 16 is a photograph of a pressure-sensitive paper showing results of evaluating the surface pressure distribution of Sample 3; and
FIG. 17 is a photograph of a pressure-sensitive paper showing results of evaluating the surface pressure distribution of Sample 4.

### DETAILED DESCRIPTION

Embodiments of the technique disclosed herein will be described below with reference to the drawings. Further, matters other than those specifically mentioned in the present specification and necessary for implementing the technique disclosed herein (for example, a general configuration and a manufacturing process of a battery) may be understood as design matters by those skilled in the art based on conventional techniques in the art. The technique disclosed herein can be implemented on the basis of the content disclosed in the present specification and common technical knowledge in the art. Also, in the present specification, the notation "A to B" indicating a range includes meanings of "A or more and B or less" as well as "preferably larger than A" and "preferably smaller than B".

In addition, in the present specification, "secondary battery" indicates a power storage device in which a charge and discharge reaction occurs when charge carriers moves between a pair of electrodes (a positive electrode and a negative electrode) via an electrolyte. The technique disclosed herein may be applied to secondary batteries (typically lithium ion secondary batteries). In secondary batteries, lithium ions (Li⁺) are used as charge carriers, and the charge carriers may be precipitated as metallic lithium (metal Li) as a result of a charge and discharge reaction.

Also, reference sign X in each figure referred to in the present specification indicates a "depth direction", reference sign Y indicates a "width direction", and reference sign Z indicates a "height direction". Further, reference sign F in the depth direction X indicates "forward" and reference sign Rr indicates "rearward". Reference sign L in the width direction Y indicates "left" and reference sign R indicates "right". In addition, reference sign U in the height direction Z indicates "upward" and reference sign D indicates "downward". However, these directions are defined for convenience of explanation, and are not intended to limit an installation form when the secondary battery disclosed herein is used.

### Secondary Battery

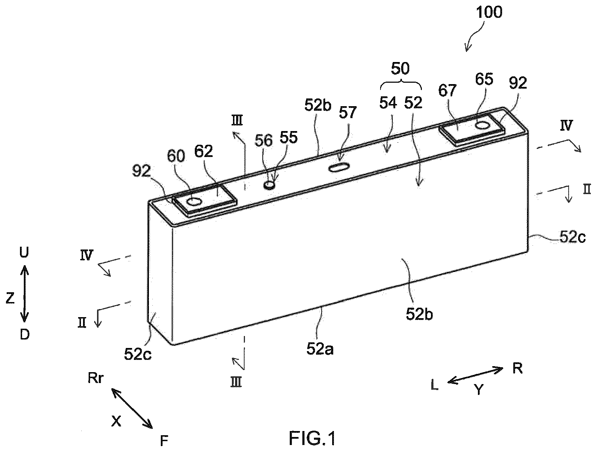

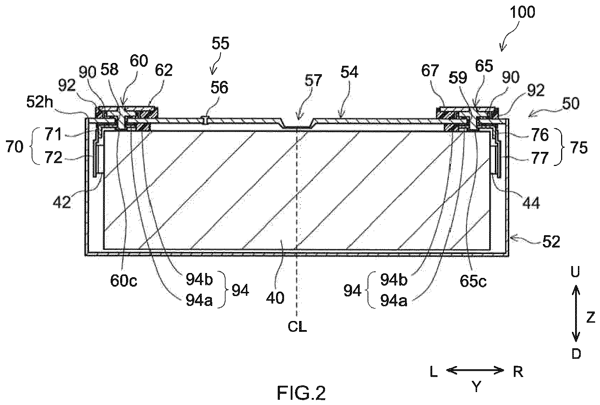

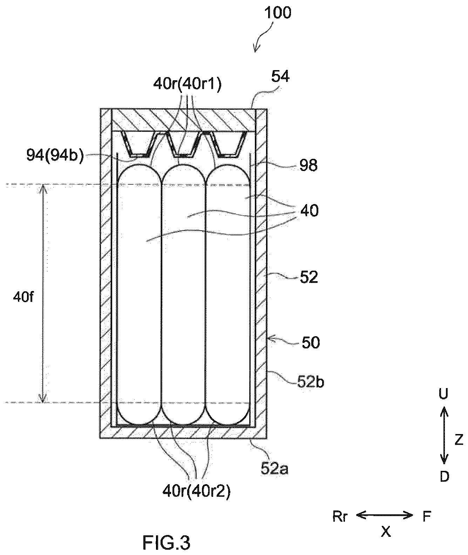

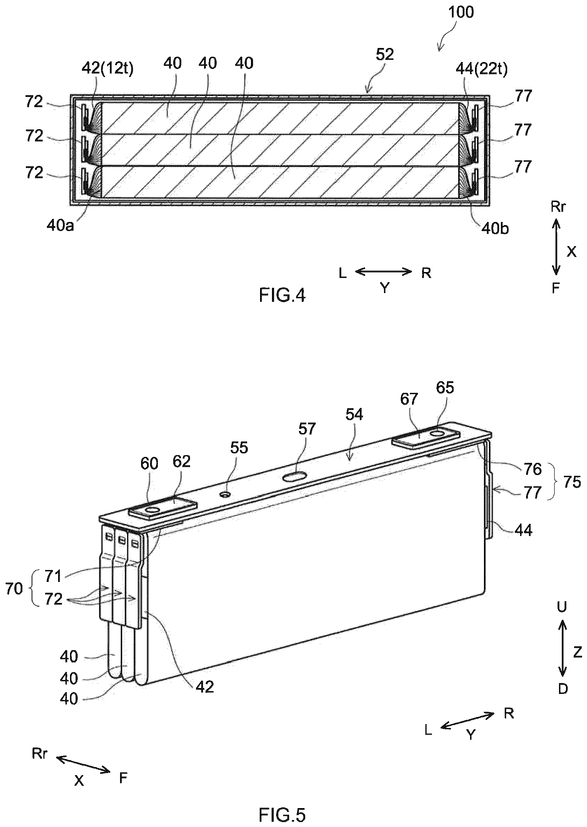

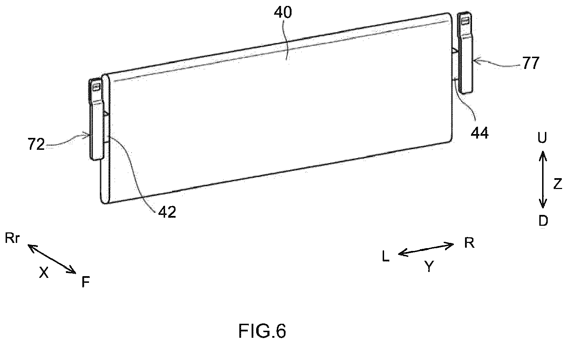

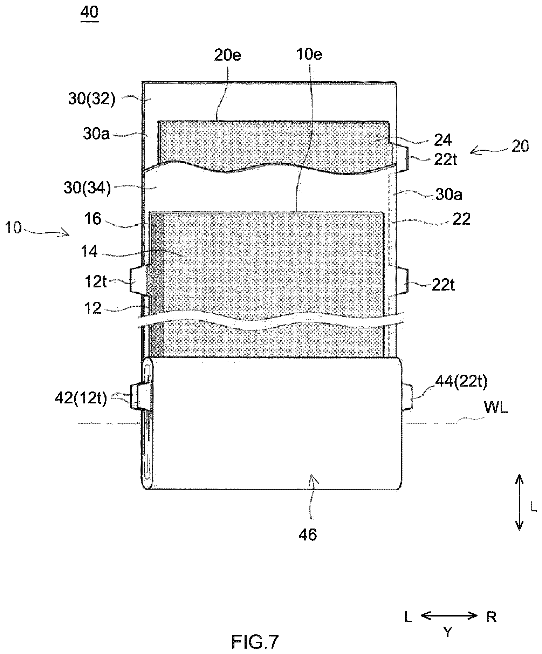

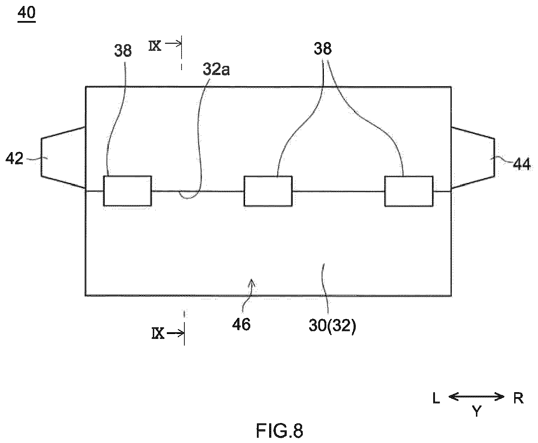

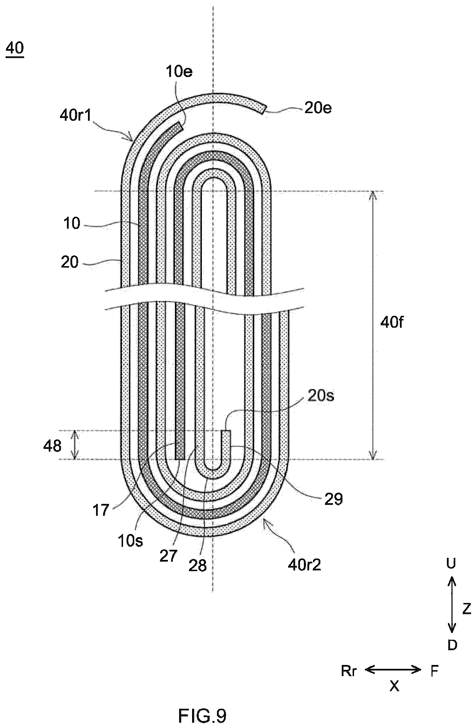

One embodiment of a secondary battery disclosed herein will be described below with reference to FIGS. 1 to 9. FIG. 1 is a perspective view schematically showing the secondary battery according to the present embodiment. FIG. 2 is a schematic vertical cross-sectional view along line II-II in FIG. 1. FIG. 3 is a schematic vertical cross-sectional view along line III-III in FIG. 1. FIG. 4 is a schematic cross-sectional view along line IV-IV in FIG. 1. FIG. 5 is a perspective view schematically showing an electrode body attached to a sealing plate. FIG. 6 is a perspective view schematically showing an electrode body to which a positive electrode second current collecting unit and a negative electrode second current collecting unit are attached. FIG. 7 is a schematic view showing a configuration of a wound electrode body of the secondary battery according to the present embodiment. FIG. 8 is a front view schematically showing the wound electrode body of FIG. 7. FIG. 9 is a schematic vertical cross-sectional view along line IX-IX in FIG. 8. Also, for convenience of explanation, description of a separator 30 (see FIG. 7, etc.) will be omitted in FIG. 9.

As shown in FIG. 2, a secondary battery 100 according to the present embodiment includes a wound electrode body 40, and a battery case 50 that houses the wound electrode body 40. A specific configuration of the secondary battery 100 will be described below.

### (1) Battery Case

The battery case 50 is a casing for housing the wound electrode body 40. Although not shown, a non-aqueous electrolytic solution is also housed inside the battery case 50. As shown in FIG. 1, the battery case 50 in the present embodiment has a flat and bottomed rectangular parallelepiped (quadrangular) outer shape. Also, a conventionally known material can be used for the battery case 50 without particular limitation. For example, the battery case 50 may be made of a metal. As an example of the material of the battery case 50, aluminum, an aluminum alloy, iron, an iron alloy, or the like can be exemplified.

The battery case 50 includes an exterior body 52 and a sealing plate 54. The exterior body 52 is a flat bottomed quadrangular container having an opening 52h on an upper surface thereof. As shown in FIGS. 1 and 2, the exterior body 52 includes a bottom wall 52a having a substantially rectangular shape in a plan view, a pair of long side walls 52b extending upward in the height direction Z from long sides of the bottom wall 52a, and a pair of short side walls 52c extending upward in the height direction Z from short sides of the bottom wall 52a. On the other hand, the sealing plate 54 is a plate-shaped member having a substantially rectangular shape in a plan view, which closes the opening 52h of the exterior body 52. In addition, an outer peripheral edge portion of the sealing plate 54 is joined (for example, welded) to an outer peripheral edge portion of the opening 52h of the exterior body 52. Thus, the battery case 50 whose inside is airtightly sealed is produced. Further, the sealing plate 54 is provided with a liquid injection hole 55 and a gas discharge valve 57. The liquid injection hole 55 is a through hole provided for injecting a non-aqueous electrolytic solution into the inside of the battery case 50 after sealing. In addition, the liquid injection hole 55 is sealed by a sealing member 56 after the non-aqueous electrolytic solution is injected. Further, the gas discharge valve 57 is a thinned portion designed to break (open) when a large amount of gas is generated in the battery case 50, thereby discharging the gas.

### (2) Non-Aqueous Electrolytic Solution

As described above, in addition to the wound electrode body 40, a non-aqueous electrolytic solution (not shown) is also housed inside the battery case 50. For the non-aqueous electrolytic solution, those used in conventionally known secondary batteries can be used without particular limitation. For example, the non-aqueous electrolyte solution is prepared by dissolving a supporting salt in a non-aqueous solvent. As an example of the non-aqueous solvent, carbonate solvents such as ethylene carbonate, dimethyl carbonate, and ethyl methyl carbonate can be exemplified. As an example of the supporting salt, a fluorine-containing lithium salt such as LiPF₆ can be exemplified.

### (3) Electrode Terminal

Further, a positive electrode terminal 60 is attached to one end portion (on a left side in FIGS. 1 and 2) of the sealing plate 54 in the width direction Y. The positive electrode terminal 60 is connected to a plate-shaped positive electrode external conductive member 62 outside the battery case 50. On the other hand, the negative electrode terminal 65 is attached to the other end portion (on a right side in FIGS. 1 and 2) of the sealing plate 54 in the width direction Y. A plate-shaped negative electrode external conductive member 67 is attached to the negative electrode terminal 65. These external conductive members (the positive electrode external conductive member 62 and the negative electrode external conductive member 67) are connected to another secondary battery and an external device via an external connection member (a bus bar or the like). Also, the external conductive members are preferably made of a metal having excellent conductivity (aluminum, an aluminum alloy, copper, a copper alloy, etc.).

### (4) Electrode Current Collecting Unit

As shown in FIGS. 3 to 5, in the secondary battery 100 according to the present embodiment, a plurality of (three) wound electrode bodies 40 are housed in the battery case 50. Although the detailed structure will be described later, each wound electrode body 40 is provided with a positive electrode tab group 42 and a negative electrode tab group 44. The positive electrode terminal 60 described above is connected to each positive electrode tab group 42 of the plurality of wound electrode bodies 40 via a positive electrode current collecting unit 70. Specifically, the positive electrode current collecting unit 70 is housed inside the battery case 50. As shown in FIGS. 2 and 5, the positive electrode current collecting unit 70 includes a positive electrode first current collecting unit 71 that is a plate-shaped conductive member extending in the width direction Y along an inner surface of the sealing plate 54, and a plurality of positive electrode second current collecting units 72 that are plate-shaped conductive members extending in the height direction Z. In addition, a lower end portion 60c of the positive electrode terminal 60 is inserted into the battery case 50 through a terminal insertion hole 58 of the sealing plate 54 and is connected to the positive electrode first current collecting unit 71 (see FIG. 2). On the other hand, as shown in FIGS. 4 to 6, the secondary battery 100 is provided with a number of positive electrode second current collecting units 72 corresponding to the number of wound electrode bodies 40. Each positive electrode second current collecting unit 72 is connected to one positive electrode tab group 42 of the wound electrode bodies 40. In addition, as shown in FIGS. 4 and 5, each positive electrode tab group 42 of the wound electrode bodies 40 is bent such that the positive electrode second current collecting units 72 and one side surfaces 40a of the wound electrode bodies 40 face each other. As a result, upper end portions of the positive electrode second current collecting units 72 and the positive electrode first current collecting unit 71 are electrically connected.

On the other hand, the negative electrode terminal 65 is connected to each negative electrode tab group 44 of the plurality of wound electrode bodies 40 via a negative electrode current collecting unit 75. Such a connection structure on the negative electrode side is substantially the same as the connection structure on the positive electrode side described above. Specifically, the negative electrode current collecting unit 75 includes a negative electrode first current collecting unit 76 that is a plate-shaped conductive member extending in the width direction Y along the inner surface of the sealing plate 54, and a plurality of negative electrode second current collecting units 77 that are plate-shaped conductive members extending in the height direction Z (see FIGS. 2 and 5). In addition, a lower end portion 65c of the negative electrode terminal 65 is inserted into the battery case 50 through a terminal insertion hole 59 and connected to the negative electrode first current collecting unit 76 (see FIG. 2). On the other hand, each of the plurality of negative electrode second current collecting units 77 is connected to one negative electrode tab group 44 of the wound electrode bodies 40 (see FIGS. 4 to 6). In addition, each negative electrode tab group 44 is bent such that the negative electrode second current collecting units 77 and the other side surfaces 40b of the wound electrode bodies 40 face each other. Thus, upper end portions of the negative electrode second current collecting units 77 and the negative electrode first current collecting unit 76 are electrically connected. Further, a metal having excellent conductivity (aluminum, an aluminum alloy, copper, a copper alloy, etc.) can be appropriately used for the electrode current collecting units (the positive electrode current collecting unit 70 and the negative electrode current collecting unit 75).

### (5) Insulation Member

Also, in the present secondary battery 100, various insulating members for preventing conduction between the wound electrode bodies 40 and the battery case 50 are attached. Specifically, an external insulating member 92 is interposed between the positive electrode external conductive member 62 (negative electrode external conductive member 67) and an outer surface of the sealing plate 54 (see FIG. 1). Thus, it is possible to prevent the positive electrode external conductive member 62 and the negative electrode external conductive member 67 from conducting with the sealing plate 54. In addition, a gasket 90 is mounted on each of the terminal insertion holes 58 and 59 of the sealing plate 54 (see FIG. 2). Thus, it is possible to prevent the positive electrode terminal 60 (or the negative electrode terminal 65) inserted through the terminal insertion holes 58 and 59 from conducting with the sealing plate 54. Further, an internal insulating member 94 is disposed between the positive electrode first current collecting unit 71 (or the negative electrode first current collecting unit 76) and an inner surface of the sealing plate 54. This internal insulating member 94 includes a plate-shaped base portion 94a interposed between the positive electrode first current collecting unit 71 (or the negative electrode first current collecting unit 76) and the inner surface of the sealing plate 54. Thus, it is possible to prevent the positive electrode first current collecting unit 71 and the negative electrode first current collecting unit 76 from conducting with the sealing plate 54. Further, the internal insulating member 94 includes a protruding portion 94b that protrudes from the inner surface of the sealing plate 54 toward the wound electrode bodies 40 (see FIGS. 2 and 3). Thus, movements of the wound electrode bodies 40 in the height direction Z can be restricted, and direct contact between the wound electrode bodies 40 and the sealing plate 54 can be prevented. In addition, the plurality of wound electrode bodies 40 are housed inside the battery case 50 in a state in which they are covered with an electrode body holder 98 (see FIG. 3) made of an insulating resin sheet. Thus, direct contact between the wound electrode bodies 40 and the exterior body 52 can be prevented. Also, the material of each of the above-mentioned insulating members is not particularly limited as long as it has a predetermined insulating property. As an example, synthetic resin materials such as a polyolefin resin (for example, polypropylene (PP) or polyethylene (PE)) and a fluororesin (for example, a perfluoroalkoxy alkane (PFA), or polytetrafluoroethylene (PTFE)) can be used.

### (6) Wound Electrode Body

As shown in FIG. 7, the electrode body used in the secondary battery 100 according to the present embodiment is a flat wound electrode body 40 in which a positive electrode plate 10 and a negative electrode plate 20 are wound via a separator 30. This wound electrode body 40 is housed in the battery case 50 such that a winding axis WL of the wound electrode body 40 and the width direction Y of the secondary battery 100 substantially coincide with each other. That is, a "winding axis direction" in the following description is substantially the same as the width direction Y in the figures. A configuration of the wound electrode body 40 will be specifically described below.

### (a) Positive Electrode Plate

As shown in FIG. 7, the positive electrode plate 10 is an elongated band-shaped member. The positive electrode plate 10 includes a positive electrode core body 12 that is a band-shaped metal foil, and a positive electrode active material layer 14 applied to a surface of the positive electrode core body 12. Also, from the viewpoint of battery performance, the positive electrode active material layer 14 is preferably applied to both surfaces of the positive electrode core body 12. Further, in the positive electrode plate 10, a positive electrode tab 12t protrudes outward (leftward in FIG. 7) from one end side thereof in the winding axis direction (width direction Y). In addition, a plurality of positive electrode tabs 12t are formed at predetermined intervals in the longitudinal direction L of the elongated band-shaped positive electrode plate 10. The positive electrode tab 12t is a region in which the positive electrode active material layer 14 is not provided and the positive electrode core body 12 is exposed. Moreover, a protective layer 16 extending in the longitudinal direction L of the positive electrode plate 10 is formed in a region adjacent to the end side of the positive electrode plate 10 on the positive electrode tab 12t side.

For each member constituting the positive electrode plate 10, a conventionally known material that can be used in general secondary batteries (for example, lithium ion secondary batteries) can be used without particular limitation. For example, a metal material having a predetermined conductivity can be preferably used for the positive electrode core body 12. The positive electrode core body 12 is preferably made of, for example, aluminum, an aluminum alloy, or the like. Further, a thickness of the positive electrode core body 12 is preferably 8 µm to 20 µm, more preferably 10 µm to 18 µm, and further preferably 12 µm to 15 µm.

Also, the positive electrode active material layer 14 is a layer containing a positive electrode active material. The positive electrode active material is a material capable of reversibly storing and releasing a charge carrier. From the viewpoint of stably producing a high-performance positive electrode plate 10, the positive electrode active material is preferably lithium transition metal composite oxides. Among the lithium transition metal composite oxides, a lithium transition metal composite oxide containing, as a transition metal, at least one element from the group consisting of nickel (Ni), cobalt (Co) and manganese (Mn) is particularly appropriate. As a specific example, a lithium nickel cobalt manganese composite oxide (NCM), a lithium nickel composite oxide, a lithium cobalt composite oxide, a lithium manganese composite oxide, a lithium nickel manganese composite oxide, a lithium nickel cobalt aluminum composite oxide (NCA), a lithium iron nickel manganese composite oxide, or the like can be exemplified. Further, as a preferable example of the lithium transition metal composite oxide containing no Ni, Co, and Mn, a lithium iron phosphate-based composite oxide (LFP) and the like can be exemplified. In addition, the term "lithium nickel cobalt manganese composite oxide" as used herein is a term that includes oxides containing an additive element in addition to the main constituent elements (Li, Ni, Co, Mn, and O). As an example of such an additive element, a transition metal element or a typical metal element such as Mg, Ca, Al, Ti, V, Cr, Si, Y, Zr, Nb, Mo, Hf, Ta, W, Na, Fe, Zn, and Sn can be exemplified. Further, the additive element may be a metalloid element such as B, C, Si, or P or a non-metal element such as S, F, Cl, Br, or I. Although the detailed description will be omitted, this also applies to other lithium transition metal composite oxides described as "-based composite oxides". Also, the positive electrode active material layer 14 may contain additives other than the positive electrode active material. As an example of such additives, a conductive material, a binder, and the like can be exemplified. As a specific example of the conductive material, a carbon material such as acetylene black (AB) can be exemplified. As a specific example of the binder, a resin binder such as polyvinylidene fluoride (PVdF) can be exemplified. In addition, when the total solid content of the positive electrode active material layer 14 is set to 100% by mass, the content of the positive electrode active material is approximately 80% by mass or more, and typically 90% by mass or more.

Further, a width dimension of the positive electrode active material layer 14 is preferably 200 mm to 400 mm, more preferably 250 mm to 350 mm, further preferably 260 mm to 300 mm, and is about 280 mm, for example. In a relatively large wound electrode body 40 in which the width dimension of the positive electrode active material layer 14 is 200 mm or more, Li precipitation tends to occur easily due to partial pressing failure, which will be described later. However, according to the technique disclosed herein, even in this type of large-sized wound electrode body 40, it is possible to prevent partial pressing failure from occurring in a flat portion 40f and inhibit precipitation of metal Li. Also, a thickness of the positive electrode active material layer 14 on one surface of the positive electrode core body 12 is preferably 10 µm to 100 µm, more preferably 20 µm to 80 µm, and further preferably 50 µm to 75 µm. In addition, in the present specification, the "width dimension" of the wound electrode body and constituent members of the wound electrode body indicates a dimension in a direction in which the winding axis WL extends (that is, the width direction Y). Further, the "thickness" of the wound electrode body and the constituent members of the wound electrode body indicates a dimension in a direction perpendicular to the flat portion 40f of the wound electrode body 40 (that is, the depth direction X).

On the other hand, the protective layer 16 is a layer configured to have lower electrical conductivity than the positive electrode active material layer 14. By providing the protective layer 16 in the region adjacent to the end side of the positive electrode plate 10, it is possible to prevent an internal short circuit due to direct contact between the positive electrode core body 12 and a negative electrode active material layer 24 when the separator 30 is damaged. For example, a layer containing insulating ceramic particles as the protective layer 16 is preferably formed. As an example of such ceramic particles, inorganic oxides such as alumina (Al₂O₃), magnesia (MgO), silica (SiO₂), and titania (TiO₂), nitrides such as aluminum nitride and silicon nitride, metal hydroxides such as calcium hydroxide, magnesium hydroxide, and aluminum hydroxide, clay minerals such as mica, talc, boehmite, zeolite, apatite, and kaolin, or glass fibers can be exemplified. Among the above, alumina, boehmite, aluminum hydroxide, silica, and titania are preferable in consideration of insulation and heat resistance. Further, the protective layer 16 may contain a binder for fixing the ceramic particles on the surface of the positive electrode core body 12. As an example of such a binder, a resin binder such as polyvinylidene fluoride (PVdF) can be exemplified. Also, the protective layer is not an essential component of the positive electrode plate. That is, in the secondary battery disclosed herein, a positive electrode plate on which a protective layer is not formed can also be used.

### (b) Negative Electrode Plate

As shown in FIG. 7, the negative electrode plate 20 is an elongated band-shaped member. The negative electrode plate 20 includes a negative electrode core body 22 that is a band-shaped metal foil, and a negative electrode active material layer 24 provided on a surface of the negative electrode core body 22. Also, from the viewpoint of battery performance, the negative electrode active material layer 24 is preferably applied to both surfaces of the negative electrode core body 22. Further, the negative electrode plate 20 is provided with a negative electrode tab 22t that protrudes outward (rightward in FIG. 7) from one end side thereof in the winding axis direction (width direction Y). A plurality of the negative electrode tabs 22t are provided at predetermined intervals in the longitudinal direction L of the negative electrode plate 20. The negative electrode tab 22t is a region in which the negative electrode active material layer 24 is not provided and the negative electrode core body 22 is exposed.

For each member constituting the negative electrode plate 20, a conventionally known material that can be used in general secondary batteries (for example, lithium ion secondary batteries) can be used without particular limitation. For example, a metal material having a predetermined conductivity can be preferably used for the negative electrode core body 22. The negative electrode core body 22 is preferably made of, for example, copper or a copper alloy. Also, a thickness of the negative electrode core body 22 is preferably 4 µm to 20 µm, more preferably 6 µm to 15 µm, and further preferably 8 µm to 10 µm.

Further, the negative electrode active material layer 24 is a layer containing a negative electrode active material. The negative electrode active material is not particularly limited as long as a charge carrier can be reversibly stored and released in relation to the positive electrode active material described above, and a material that can be used in conventional general secondary batteries can be used without particular limitation. As an example of such a negative electrode active material, a carbon material, a silicon-based material, or the like can be exemplified. As the carbon material, for example, graphite, hard carbon, soft carbon, amorphous carbon, or the like may be used. Also, amorphous carbon-coated graphite in which a surface of graphite is coated with amorphous carbon can also be used. On the other hand, as an example of the silicon-based material, silicon, silicon oxide (silica), or the like can be exemplified. Also, the silicon-based material may contain other metal elements (for example, alkaline earth metals) and oxides thereof. Also, the negative electrode active material layer 24 may contain additives other than the negative electrode active material. As an example of such additives, a binder, a thickener, and the like can be exemplified. As a specific example of the binder, a rubber-based binder such as styrene-butadiene rubber (SBR) can be exemplified. Also, as a specific example of the thickener, carboxymethyl cellulose (CMC) or the like can be exemplified. Further, when the total solid content of the negative electrode active material layer 24 is set to 100% by mass, the content of the negative electrode active material is approximately 30% by mass or more, and typically 50% by mass or more. Also, the negative electrode active material may occupy 80% by mass or more of the negative electrode active material layer 24, or may occupy 90% by mass or more. Moreover, a width dimension of the negative electrode active material layer 24 is preferably 200 mm to 400 mm, more preferably 250 mm to 350 mm, further preferably 260 mm to 300 mm, and is about 285 mm, for example. Further, a thickness of the negative electrode active material layer 24 on one surface of the negative electrode core body 22 is preferably 10 µm to 200 µm, more preferably 50 µm to 100 µm, and further preferably 75 µm to 85 µm.

### (c) Separator

The wound electrode body 40 in the present embodiment includes two separators 30. In the following, for convenience of explanation, the separator 30 disposed outside the negative electrode plate 20 may be referred to as a "first separator 32", and the separator 30 disposed between the negative electrode plate 20 and the positive electrode plate 10 may be referred to as a "second separator 34". These separators 30 are sheet-shaped members having a function of preventing contact between the positive electrode plate 10 and the negative electrode plate 20 and allowing charge carriers (for example, lithium ions) to pass therethrough. As an example of such a separator 30, an insulating sheet in which a plurality of fine pores through which charge carriers can pass are formed can be exemplified.

For the separator 30, those used in conventionally known secondary batteries can be used without particular limitation. As a preferable example of the separator 30, a separator including a porous base material layer made of a resin such as a polyolefin resin (for example, polyethylene (PE), or polypropylene (PP)) can be exemplified. Also, a porous surface layer containing an insulating inorganic material is preferably formed on a surface of the porous base material layer. Since this porous surface layer has excellent heat resistance, it is possible to inhibit shrinkage and breakage of the separator 30 due to an increase in temperature. As an example of the inorganic material of the porous surface layer, ceramic particles such as alumina, boehmite, aluminum hydroxide, or titania can be exemplified. In addition, the porous surface layer contains a binder for binding ceramic particles. As the binder, a resin binder such as polyvinylidene fluoride (PVdF) or an acrylic resin can be used. Also, the two separators 30 (the first separator 32 and the second separator 34) used in the present embodiment may be made of the same material or may be made of different materials. Also, a thickness of each separator 30 is preferably 4 µm to 30 µm, more preferably 6 µm to 20 µm, and further preferably 8 µm to 16 µm,

Further, it is particularly preferable that the porous base material layer of the separator 30 have a porosity in the range of 30% to 60%. The separator 30 having the porous surface layer having such a porosity is deformed to be crushed during press-molding of the wound electrode body 40, so that it can function as a cushioning material that absorbs a variation in the thickness of the wound electrode body 40. That is, by using the separator 30 having the porous surface layer having the porosity, it is possible to prevent a step from being generated on a surface of the flat portion 40f of the wound electrode body 40, and to make a surface pressure distribution of the flat portion 40f uniform, which can contribute to improvement of Li precipitation resistance. Also, the porosity of the porous surface layer described above indicates a porosity before the wound electrode body 40 is manufactured (before press-molding). In the wound electrode body 40 after press-molding, by measuring the porosity of the porous surface layer of the separator 30 disposed in a region not facing the negative electrode plate 20 and the positive electrode plate 10, the porosity of the porous surface layer before press-molding can be examined. In addition, as the "region not facing the negative electrode plate 20 and the positive electrode plate 10" here, a "region 30a in which only the separator 30 extends" formed on both side edge portions of the wound electrode body 40 in the winding axis direction, or the like can be exemplified.

Also, in a case in which the separator 30 having the porous surface layer is caused to function as a cushioning material, press-molding is preferably performed such that a thickness of the porous base material layer after pressing is reduced to be equal to or less than 70% (more preferably 60%, and further preferably 50%) of a thickness thereof before pressing. By sufficiently deforming the porous surface layer in this way, a variation in the thickness of the wound electrode body 40 can be sufficiently absorbed. Further, in order to examine a reduction rate of the thickness of the porous base material layer due to the press-molding in the wound electrode body 40 after production, it is advisable to examine a thickness of the porous surface layer of the separator 30 interposed between the positive electrode plate 10 and the negative electrode plate 20 and a thickness of the porous surface layer in the region not facing the negative electrode plate 20 and the positive electrode plate 10.

Also, an adhesive layer is preferably provided on at least one surface of each separator 30. Such an adhesive layer is a layer containing a resin binder such as polyvinylidene fluoride (PVdF) or an acrylic resin and adheres to the positive electrode plate 10 and the negative electrode plate 20 using pressure, heat, or the like. Thus, a positional displacement of sheet members (the positive electrode plate 10, the negative electrode plate 20, and the separator 30) inside the wound electrode body 40 can be prevented. As will be described in detail later, in the secondary battery 100 according to the present embodiment, precipitation of metal Li is inhibited by adjusting arrangement positions of starting end portions of the positive electrode plate 10 and the negative electrode plate 20 (a positive electrode starting end portion 10s and a negative electrode starting end portion 20s). For this reason, by using the separator 30 having the adhesive layer to prevent the positional displacement between the positive electrode plate 10 and the negative electrode plate 20, the above-mentioned Li precipitation inhibition effect can be more stably exhibited. Also, from the viewpoint of more appropriately preventing the positional displacement of the sheet members, the adhesive layer is preferably formed on both sides of the separator 30. Further, in a case in which the adhesive layer is formed on only one surface of the separator 30, the adhesive layer is preferably formed on a surface in contact with the positive electrode plate 10. This is because an arrangement position of the positive electrode plate 10 tends to be more easily displaced than that of the negative electrode plate 20. Also, in the case of the separator 30 having the porous surface layer described above, the adhesive layer may be separately formed on a surface of the porous surface layer, or the porous surface layer may also serve as the adhesive layer. The porous surface layer that also serves as the adhesive layer can be formed by increasing a content ratio of a binder. For example, when the total weight of the porous surface layer is set to 100% by mass, the content ratio of the binder may be 5% by mass or more (preferably 10% by mass or more). This can form the porous surface layer that exhibits a certain level of adhesiveness and functions as the adhesive layer.

A mesh-shaped protruding portion is preferably formed on a surface of the adhesive layer in a plan view. Since the mesh-shaped protruding portion is easily pressed and deformed during press-molding of the wound electrode body 40, it can function as a cushioning material between the sheet-shaped members. As a result, it is possible to absorb the variation in the thickness of the wound electrode body 40 in the plane of the flat portion 40f after press-molding, and more preferably inhibit the precipitation of metal Li. Also, the adhesive layer is not limited to the above form. For example, the adhesive layer itself may be formed in a mesh shape. In other words, a mesh-shaped adhesive layer may be formed on the surface of the porous base material layer or the porous surface layer in a plan view. Such a mesh-shaped adhesive layer can also function as a cushioning material.

### (d) Structure of Wound Electrode Body

Next, a specific structure of the wound electrode body 40 including the positive electrode plate 10, the negative electrode plate 20, and the separator 30 described above will be described. The wound electrode body 40 is produced by stacking and winding the positive electrode plate 10 and the negative electrode plate 20 with the two separators 30 interposed therebetween. Specifically, first, a stacked body in which the first separator 32, the negative electrode plate 20, the second separator 34, and the positive electrode plate 10 are stacked in order is produced (see FIG. 7). In this case, stacking positions of each sheet member in the width direction Y are adjusted such that only the positive electrode tab 12t of the positive electrode plate 10 protrudes from one side edge thereof in the width direction Y (leftward in FIG. 7), and only the negative electrode tab 22t of the negative electrode plate 20 protrudes from the other side edge (rightward in FIG. 7). Then, the produced stacked body is wound to produce a tubular body. The number of windings in this case is preferably adjusted as appropriate in consideration of performance of a target wound electrode body 40, manufacturing efficiency, and the like. As an example, the number of windings of the wound electrode body 40 is preferably 10 to 60 times, and more preferably 30 to 40 times. Then, by pressing this tubular body, a flat-shaped wound electrode body 40 is produced. Then, as shown in FIG. 8, the first separator 32 is disposed on an outermost peripheral surface of the wound electrode body 40 after production. By attaching winding stop tapes 38 to a terminating end portion 32a of the first separator 32, the shape of the wound electrode body 40 is maintained.

As shown in FIG. 9, in the wound electrode body 40 after production, one end portion of the positive electrode plate 10 in the longitudinal direction L is disposed as the positive electrode starting end portion 10s on an inner side of the wound electrode body 40. Then, the other end portion of the positive electrode plate 10 is disposed as a positive electrode terminating end portion 10e on an outer side of the wound electrode body 40. Similarly, one end portion of the negative electrode plate 20 is disposed as the negative electrode starting end portion 20s on an inner side of the wound electrode body 40. Further, the other end portion of the negative electrode plate 20 is disposed as a negative electrode terminating end portion 20e on an outer side of the wound electrode body 40. Also, although not shown in FIG. 9, the positive electrode active material layer 14 (see FIG. 7) is provided up to both end portions (the positive electrode starting end portion 10s and the positive electrode terminating end portion 10e) of the positive electrode plate 10 in the longitudinal direction L. Similarly, the negative electrode active material layer 24 (see FIG. 7) is provided up to both end portions (the negative electrode starting end portion 20s and the negative electrode terminating end portion 20e) of the negative electrode plate 20 in the longitudinal direction L.

Further, the positive electrode tab group 42 in which the plurality of positive electrode tabs 12t with the exposed positive electrode core body 12 are stacked is formed at one end portion of the wound electrode body 40 after winding in the winding axis direction (width direction Y). On the other hand, the negative electrode tab group 44 in which the plurality of negative electrode tabs 22t with the exposed negative electrode core body 22 are stacked is formed at the other end portion of the wound electrode body 40 in the winding axis direction (width direction Y). On the other hand, a core portion 46 in which the positive electrode active material layer 14 and the negative electrode active material layer 24 face each other is formed at a central portion of the wound electrode body 40 in the width direction Y. The core portion 46 is a main place in which the charge and discharge reaction occurs. Here, as described above, the positive electrode tab group 42 in the present embodiment is connected to the positive electrode second current collecting unit 72, and then is bent such that the positive electrode second current collecting unit 72 faces the side surface 40a of the wound electrode body 40 (see FIGS. 4 to 6). Similarly, the negative electrode tab group 44 is connected to the negative electrode second current collecting unit 77, and then is bent such that the negative electrode second current collecting unit 77 faces the side surface 40b of the wound electrode body 40. By providing the positive electrode tab group 42 (and the negative electrode tab group 44) that can be bent in this way, a volume of the core portion 46 (charge and discharge region) with respect to an internal capacity of the battery case 50 can be increased, which thus can contribute to improvement of battery performance.

As described above, the wound electrode body 40 in the present embodiment is molded into a flat shape by press-molding. As shown in FIG. 9, the flat-shaped wound electrode body 40 has a pair of curved portions 40r1 and 40r2 each having a curved outer surface, and a flat portion 40f having a flat outer surface connecting the pair of curved portions 40r1 and 40r2. As shown in FIG. 3, when the wound electrode body 40 is housed in the battery case 50, the flat portion 40f faces a long side wall 52b of the exterior body 52 (that is, a flat surface of the battery case 50). Further, the upper curved portion 40r1 faces the sealing plate 54, and the lower curved portion 40r2 faces the bottom wall 52a of the exterior body 52.

Here, if a region thinner than other regions is formed at a part in the plane of the flat portion 40f of the wound electrode body 40, the precipitation of metal Li is promoted in the vicinity of the region. Specifically, the secondary battery 100 of this type is usually used in a state in which the flat surface (long side wall 52b of the exterior body 52) of the battery case 50 is pressed to be sandwiched and the flat portion 40f of the wound electrode body 40 is pressed. As a result, an inter-electrode distance between the positive electrode plate 10 and the negative electrode plate 20 inside the wound electrode body 40 becomes smaller, and thus electrical resistance is reduced. However, in the above-mentioned region in which the thickness is locally thin, the pressure when the flat portion 40f is pressed is not sufficiently transmitted, and thus the region has a locally large inter-electrode distance and the electrical resistance increases. In addition, around the region in which the inter-electrode distance is locally large, the metal Li is likely to be deposited on the surface of the negative electrode active material layer 24 due to current concentration. Further, in a region in which the inter-electrode distance is locally large, a gas decomposed by the non-aqueous electrolytic solution tends to accumulate, and thus the electric resistance further increases when charging and discharging are repeated, and the precipitation of metal Li is more likely to occur.

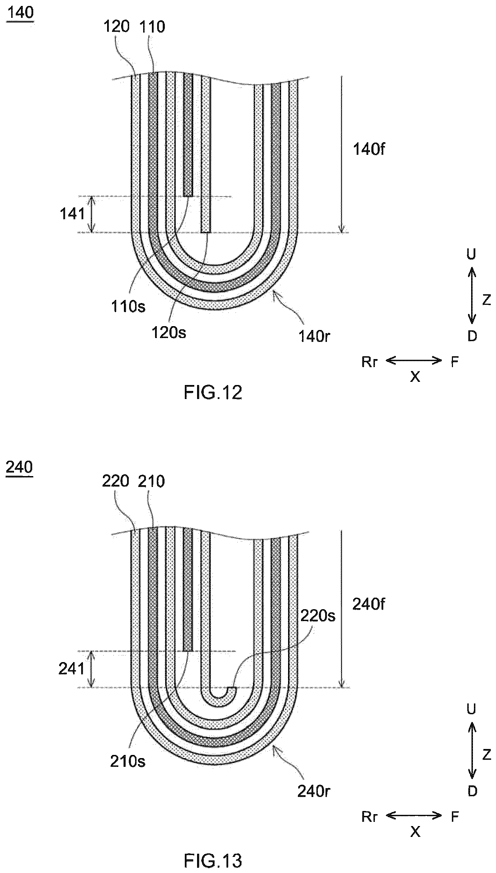

As an example, in a conventional wound electrode body 140 shown in FIG. 12, the number of layers of sheet-shaped members is insufficient in a flat portion 140f near a curved portion 140r, and a partial thickness shortage tends to occur. Specifically, when the flat-shaped wound electrode body 140 is molded, disposing both of a positive electrode starting end portion 110s and a negative electrode starting end portion 120s (particularly the positive electrode starting end portion 110s) in the curved portion 140r, and making the number of layers of electrode plates (a positive electrode plate 110 and a negative electrode plate 120) in the plane of the flat portion 140f the same are very difficult. For this reason, in the wound electrode body 140 of this type, a region 141 in which the number of layers of the electrode plates is smaller than other regions of the flat portion 140f is usually generated in the vicinity of the curved portion 140r. In this case, in the region 141 in which the number of layers is insufficient, a pressing failure occurs and the metal Li is likely to be deposited due to a local increase in the inter-electrode distance. Further, the promoted precipitation of the metal Li of this kind can also occur in a wound electrode body 240 having a configuration shown in FIG. 13. Specifically, the wound electrode body 240 shown in FIG. 13 adopts a configuration in which a negative electrode starting end portion 220s is caused to extend to a curved portion 240r side, and a region (extended portion) of a negative electrode plate 220 that does not overlap a positive electrode plate 210 is folded back. However, even when such a configuration is adopted, a region 241 in which the number of layers of the electrode plates is insufficient is generated in the flat portion 240f, and thus the metal Li is likely to be deposited around the region 241.

On the other hand, in the secondary battery 100 according to the present embodiment, from the viewpoint of preventing partial pressing failure in the flat portion 40f of the wound electrode body 40, the arrangement positions of the positive electrode starting end portion 10s and the negative electrode starting end portion 20s are adjusted. Specifically, as shown in FIG. 9, the positive electrode starting end portion 10s of the positive electrode plate 10 in the present embodiment has a first region 17 extending along the flat portion 40f of the wound electrode body 40. On the other hand, the negative electrode starting end portion 20s of the negative electrode plate 20 has a second region 27 extending along the flat portion 40f, a folded portion 28 that is folded back from an end portion of the second region 27 to be along the curved portion 40r2, and a third region 29 extending from an end portion of the folded portion 28 along the flat portion 40f. In the wound electrode body 40 having such a configuration, an electrode starting end stacked portion 48 in which the first region 17, the second region 27, and the third region 29 overlap each other in the thickness direction (depth direction X) is formed in a region including the flat portion 40f close to the curved portion 40r2. As a result, it is possible to prevent the partial pressing failure from occurring in the flat portion 40f close to the curved portion 40r2, and thus the precipitation of metal Li due to the local increase in the inter-electrode distance can be appropriately inhibited.

Also, in the present specification, each of the first region 17, the second region 27, and the third region 29 is described as "extending along the flat portion 40f However, such a description is not limited to the fact that each of the first region 17, the second region 27, and the third region 29 is parallel to an outer surface of the flat portion 40f. That is, each of the first region 17, the second region 27, and the third region 29 may be slightly inclined with respect to the outer surface of the flat portion 40f. In addition, each of the first region 17, the second region 27, and the third region 29 does not strictly have straight line shapes and may be curved or meandering. Also, the same applies to the folded portion 28, which does not have to be parallel to an outer surface of the curved portion 40r2 and may meander or the like.

Further, a length of the electrode starting end stacked portion 48 in the height direction Z is preferably 0.5 mm to 10 mm, more preferably 1 mm to 10 mm, further preferably 1 mm to 7 mm, and is about 3 mm, for example. This prevents the partial pressing failure in the flat portion 40f more suitably, and thus Li precipitation resistance can be improved more appropriately. Also, in the secondary battery 100 having the plurality of wound electrode bodies 40 as in the present embodiment, it is preferable that lengths of electrode starting end stacked portions 48 of the wound electrode bodies 40 be different from each other. As a result, when all of the plurality of wound electrode bodies 40 are pressed from the outside of the battery case 50, it is possible to contribute to a uniform surface pressure distribution in the flat portion 40f of each wound electrode body 40, and thus the Li precipitation resistance on the entire surface of the flat portion 40f can be appropriately improved.

Further, as shown in FIG. 9, in the wound electrode body 40 in the present embodiment, the positive electrode starting end portion 10s is disposed in the vicinity of the curved portion 40r2 on a lower side in the height direction Z. On the other hand, the positive electrode terminating end portion 10e is disposed at a position closer to the curved portion 40r1 above the positive electrode starting end portion 10s. As a result, it is possible to prevent the positive electrode starting end portion 10s and the positive electrode terminating end portion 10e from coming close to each other in a circumferential direction of the wound electrode body 40, which thus can contribute to a uniform surface pressure distribution in the flat portion 40f. In addition, in the present embodiment, the negative electrode terminating end portion 20e of the negative electrode plate 20 is also similarly disposed at a position closer to the curved portion 40r1 above the negative electrode starting end portion 20s. As a result, the surface pressure distribution in the flat portion 40f can be further made uniform.

More specifically, in the present embodiment, the positive electrode terminating end portion 10e and the negative electrode terminating end portion 20e are disposed on the upper curved portion 40r1. In this case, it is possible to prevent a step caused by the positive electrode terminating end portion 10e and the negative electrode terminating end portion 20e from occurring on the surface of the flat portion 40f, and thus the surface pressure distribution in the flat portion 40f can be further made uniform. Also, the negative electrode terminating end portion 20e preferably extends from the positive electrode terminating end portion 10e on the outermost circumference of the wound electrode body 40 such that the positive electrode terminating end portion 10e is covered with the negative electrode plate 20. For example, as shown in FIG. 9, in a case in which the positive electrode terminating end portion 10e is disposed in a region between 9 o'clock and 12 o'clock in an arc of the upper curved portion 40r1, the negative electrode terminating end portion 20e is preferably disposed in a region between 12 o'clock and 3 o'clock. By making the negative electrode plate 20 longer than the positive electrode plate 10 in this way and sufficiently ensuring storage performance of charge carriers on the negative electrode side, the Li precipitation resistance can be further improved. Further, in a case in which the positive electrode starting end portion 10s and the negative electrode starting end portion 20s are disposed in the curved portion 40r1, the separator 30 provided with the adhesive layer is preferably used. As a result, it is possible to prevent the positive electrode starting end portion 10s and the negative electrode starting end portion 20s from deviating from the curved portion 40r1.

Further, a height dimension of the wound electrode body 40 in the present embodiment is preferably 60 mm to 120 mm, more preferably 80 mm to 110 mm, particularly preferably 90 mm to 100 mm, and is about 95 mm, for example. Also, a thickness of the wound electrode body 40 is preferably 5 mm to 25 mm, more preferably 8 mm to 20 mm, and particularly preferably 10 mm to 15 mm. The effect of inhibiting the Li precipitation obtained by the technique disclosed herein is particularly preferably exhibited in the secondary battery including the wound electrode body 40 having the dimensions as described above. The "height dimension" used herein indicates a dimension in a direction that is perpendicular to the winding axis WL and perpendicular to the thickness direction (depth direction X) (that is, the height direction Z).

Also, a proportion of the thickness of the positive electrode plate 10 to the thickness of the negative electrode plate 20 is preferably 65% to 95%, more preferably 70% to 90%, and particularly preferably 75% to 85%. Thus, the effect of obtaining the optimum electrode body thickness and constituent pressure can be obtained. The "thickness of the electrode plate (the positive electrode plate or the negative electrode plate)" in the present specification is the total thickness of an electrode active material layer and an electrode core body. For example, in an electrode plate in which electrode active material layers are formed on both sides of an electrode core body, the total thickness of the two electrode active material layers and the electrode core body is the "thickness of the electrode plate".

### Other Embodiments

One embodiment of the technique disclosed herein has been described above. Also, the above-described embodiment shows an example to which the technique disclosed herein is applied and does not limit the technique disclosed herein. Other embodiments of the technique disclosed herein will be described below.

### (1) Number of Wound Electrode Bodies

For example, the secondary battery 100 according to the above-described embodiment is a high-capacity secondary battery in which three wound electrode bodies 40 are housed inside the battery case 50. However, the number of electrode bodies housed in one battery case is not particularly limited and may be two or more (plural) or one. Further, in a secondary battery including a plurality of wound electrode bodies, there is a possibility that the partial pressing failure may occur in the vicinity of a curved portion of each wound electrode body, and thus the precipitation of metal Li tends to occur easily. On the other hand, in the technique disclosed herein, it is possible to adopt a structure for preventing the partial pressing failure for each of the plurality of wound electrode bodies, and thus the precipitation of metal Li can be appropriately inhibited.

### (2) Capacity of Secondary Battery

Further, in order to construct a high-capacity secondary battery, it is required to increase a filling density of a positive electrode active material layer that releases charge carriers during charging and increase positive electrode capacity. In this case, since a ratio of capacity of a negative electrode to capacity of a positive electrode (opposite capacity ratio: negative electrode capacity/positive electrode capacity) decreases, the metal Li tends to be deposited on a surface of a negative electrode plate. On the other hand, according to the technique disclosed herein, the Li precipitation resistance can be improved due to the improvement in structural perspective of adjusting the arrangement positions of the positive electrode starting end portion and the negative electrode starting end portion. For this reason, it is possible to realize a higher density of the positive electrode active material layer, which was difficult from the viewpoint of the Li precipitation resistance, and to contribute to higher capacity of the secondary battery. For example, according to the technique disclosed herein, even in a case in which a wound electrode body having a filling density of the positive electrode active material layer of 3.4 g/cc or more (for example, 3.6 g/cc), and an opposite capacity ratio of 1.1 or less (for example, 1.08) is used, the precipitation of metal Li can be appropriately inhibited.

### (3) Positions of Starting End Portions of Each Electrode

In the above-described embodiment, the positive electrode starting end portion 10s and the negative electrode starting end portion 20s are disposed in the vicinity of the lower curved portion 40r2, and the positive electrode terminating end portion 10e and the negative electrode terminating end portion 20e are disposed in the upper curved portion 40r1. However, as long as the electrode starting end stacked portion is formed in the flat portion of the wound electrode body, the arrangement positions of the starting end portions and the terminating end portions of the positive electrode plate and the negative electrode plate are not particularly limited. That is, in the technique disclosed herein, the positive electrode starting end portion and the negative electrode starting end portion may be disposed in the vicinity of the upper curved portion, and the electrode starting end stacked portion may be formed in the flat portion in the vicinity of the upper curved portion. Even in this case, the partial pressure failure can be prevented and the precipitation of Li can be sufficiently inhibited. However, electric power concentration tends to occur easily in the regions close to the positive electrode tab group and the negative electrode tab group. In consideration of this point, the positive electrode starting end portion and the negative electrode starting end portion are preferably disposed in the vicinity of the curved portion separated from the positive electrode tab group and the negative electrode tab group. That is, as shown in FIG. 2, in the wound electrode body 40 in which the positive electrode tab group 42 and the negative electrode tab group 44 are formed on the upper portion in the height direction Z, the positive electrode starting end portion 10s and the negative electrode starting end portion 20s are preferably disposed in the vicinity of the lower curved portion 40r2.

### (4) Starting End Portion of Separator

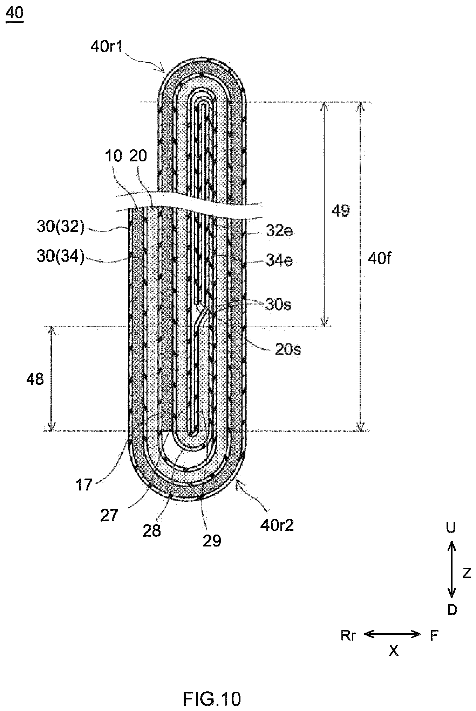

As shown in FIG. 9, in the secondary battery 100 according to the above-described embodiment, the arrangement positions of the positive electrode starting end portion 10s and the negative electrode starting end portion 20s are adjusted to form the electrode starting end stacked portion 48, thereby inhibiting the precipitation of metal Li. Here, in order to inhibit the precipitation of metal Li more appropriately, an arrangement position of a starting end portion of the separator is also preferably adjusted in addition to the starting end portions of the positive electrode plate and the negative electrode plate. An embodiment in which the arrangement position of the starting end portion of the separator is adjusted will be described below. FIG. 10 is a schematic cross-sectional view of a wound electrode body of a secondary battery according to another embodiment.

As shown in FIG. 10, in the present embodiment, starting end portions 30s of two separators 30 extend from the negative electrode starting end portion 20s. Specifically, one end portion of the first separator 32 in the longitudinal direction (the starting end portion 30s of the first separator 32) has a first extension portion 32e extending from the negative electrode starting end portion 20s. Similarly, one end portion of the second separator 34 (the starting end portion 30s of the second separator 34) has a second extension portion 34e extending from the negative electrode starting end portion 20s. In a case in which the starting end portion 30s of the separator 30 is extended from the negative electrode starting end portion 20s in this way, it is possible to prevent a step due to the negative electrode starting end portion 20s from being generated in the region adjacent to the electrode starting end stacked portion 48. As a result, the surface pressure distribution on the flat portion 40f of the wound electrode body 40 can be made uniform, and thus the Li precipitation resistance on the entire surface of the flat portion 40f can be improved.

Further, in the embodiment shown in FIG. 10, each of the first extension portion 32e and the second extension portion 34e is folded back along the upper curved portion 40r1. Thus, a separator stacked portion 49 in which only the first separator 32 and the second separator 34 are stacked is formed inside the wound electrode body 40. As a result, the surface pressure distribution in the flat portion 40f can be further made uniform, and the Li precipitation resistance in the entire surface of the flat portion 40f can be more appropriately improved. Further, it is preferable that the number of layers of the separator 30 in the separator stacked portion 49 is preferably appropriately adjusted in consideration of the thickness of the negative electrode plate 20 and the thickness of the separator 30. Specifically, in the wound electrode body 40 before pressing, the number of layers of the separator 30 is preferably adjusted such that the separator stacked portion 49 is slightly thicker than the negative electrode plate 20. As an example, in the separator stacked portion 49, the first separator 32 is preferably stacked in three or more layers and the second separator is preferably stacked in two or more layers. As a result, when the wound electrode body 40 is pressed, the separator stacked portion 49 is deformed to be crushed, and thus generation of a step caused by the negative electrode starting end portion 20s can be appropriately inhibited.

Also, in a case in which the starting end portion 30s of the separator 30 extends from the negative electrode starting end portion 20s as in the present embodiment, an adhesive layer is preferably formed on a surface of each separator 30. In other words, each of the first extension portion 32e extending from the first separator 32 and the second extension portion 34e extending from the second separator 34 preferably adheres thereto due to the adhesive layer. As a result, it is possible to prevent the separator 30 from being positionally displaced inside the wound electrode body 40 (particularly, the separator stacked portion 49).

Further, as shown in FIG. 10, in the present embodiment, the separator 30 (second separator 34) is interposed between the second region 27 and the third region 29 in the electrode starting end stacked portion 48. In this case, a distance between the second region 27 and the third region 29 in the thickness direction (depth direction X) is preferably smaller than the thickness of the negative electrode plate 20. Specifically, in a case in which the separator 30 is disposed between the second region 27 and the third region 29, the separator 30 in the electrode starting end stacked portion 48 is deformed to be crushed by a pressure from the outside of the battery case 50. In this case, by adjusting the thickness of the separator 30 and the pressure on the wound electrode body 40 such that the distance between the second region 27 and the third region 29 decreases, a gap between the second region 27 and the third region 29 decreases, and thus the constituent pressure applied to the electrode body can be made uniform. For example, the gap between the second region 27 and the third region 29 in the electrode starting end stacked portion 48 is preferably 50 µm or less, more preferably 30 µm or less, and particularly preferably 20 µm or less. As described above, by making the state in which there is almost no gap between the second region 27 and the third region 29, the effect of making the constituent pressure uniform is more appropriately exhibited. Also, in the present specification, the "gap between the second region and the third region in the electrode starting end stacked portion" is a value obtained by subtracting the total thickness of the separator interposed between the second region and the third region from the distance from the second region to the third region.

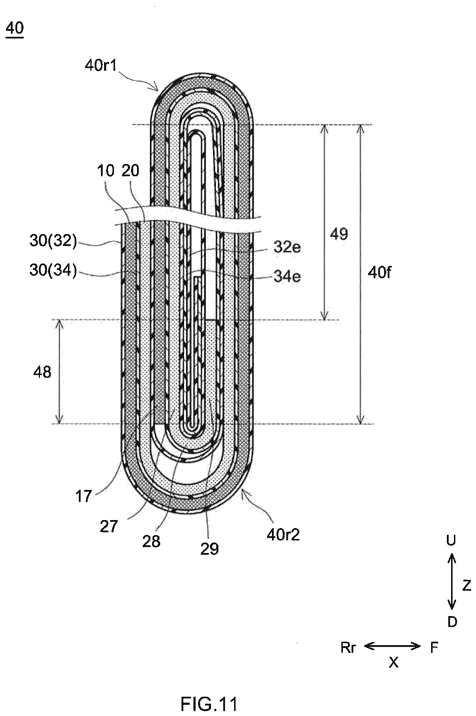

Further, in the embodiment shown in FIG. 10, the separator 30 interposed between the second region 27 and the third region 29 of the electrode starting end stacked portion 48 is only the second separator 34. However, the separator interposed between the second region and the third region is not limited to the second separator. For example, in the embodiment shown in FIG. 11, both of the first separator 32 and the second separator 34 are interposed between the second region 27 and the third region 29 of the electrode starting end stacked portion 48. Specifically, in the embodiment shown in FIG. 11, each of the first extension portion 32e of the first separator 32 and the second extension portion 34e of the second separator 34 is folded back along the upper curved portion 40r1 and inserted between the second region 27 and the third region 29. According to such a configuration, the separator 30 having three or more layers can be disposed between the second region 27 and the third region 29. As a result, the gap present between the second region 27 and the third region 29 in the electrode starting end stacked portion 48 can be more easily made smaller. Also, as shown in FIG. 11, the first extension portion 32e and the second extension portion 34e inserted between the second region 27 and the third region 29 may be folded back along the folded portion 28 of the negative electrode plate 20. As a result, by interposing a separator having four or more layers between the second region 27 and the third region 29, the gap present between the second region 27 and the third region 29 can be made even smaller.

### Test Examples

Test examples relating to the present disclosure will be described below. Also, the contents of the test examples described below are not intended to limit the present disclosure.

### 1. Production of Each Sample

In the present test, four types of wound electrode bodies (Samples 1 to 4) having different arrangement positions of the positive electrode starting end portion and the negative electrode starting end portion were produced. Each sample will be specifically described below.

### (1) Sample 1

In the present test, a stacked body in which a positive electrode plate and a negative electrode plate were stacked with two separators interposed therebetween was prepared, and the stacked body was wound and then press-molded, thereby producing flat-shaped wound electrode body. First, a positive electrode plate was prepared in which a positive electrode active material layer (having a thickness of 60 µm and a width of 280 mm) was applied to both surfaces of a positive electrode core body (aluminum foil having a thickness of 13 µm), The positive electrode active material layer of the positive electrode plate contains a positive electrode active material, a conductive material, and a binder in a ratio of 97.5:1.5:1.0. Also, a lithium nickel cobalt manganese composite oxide (NCM) was used for the positive electrode active material. Further, acetylene black (AB) was used for the conductive material. In addition, polyvinylidene fluoride (PVdF) was used for the binder. On the other hand, for the negative electrode plate, a negative electrode core body (copper foil having a thickness of 8 µm) to which a negative electrode active material layer (having a thickness of 80 µm and a width of 285 mm) was provided on both surfaces thereof was used. The negative electrode active material layer of the negative electrode plate contains a negative electrode active material, a thickener, and a binder in a ratio of 98.3:0.7:1.0. Further, graphite was used for the negative electrode active material, carboxymethyl cellulose (CMC) was used for the thickener, and styrene butadiene rubber (SBR) was used for the binder. In addition, for the separator, one in which a porous surface layer containing alumina powder and polyvinylidene fluoride (PVdF) was formed on a surface of a porous base material layer made of polyethylene (PE) was used. Also, in the present test, the content of PVdF in the porous surface layer was adjusted to 25% by mass so that the porous surface layer of the separator functions as an adhesive layer.

Next, the stacked body in which the positive electrode plate and the negative electrode plate were stacked with the separator interposed therebetween was produced, and a tubular body was produced by winding the stacked body. The number of windings in the present test was set to 33. Then, press-molding was carried out, and the tubular body after winding was crushed to produce the flat-shaped wound electrode body. Here, in the wound electrode body 240 of Sample 1, as shown in FIG. 13, a configuration was adopted in which the negative electrode starting end portion 220s was extended to the curved portion 240r side, and the region (extended portion) of the negative electrode plate 220 that did not overlap the positive electrode plate 210 was folded back. Specifically, after the stacked body in which the negative electrode plate 220 extended from the positive electrode starting end portion 210s was produced, the extended negative electrode plate 220 was bent not to overlap the positive electrode plate 210. Then, the wound electrode body 240 having the structure shown in FIG. 13 was produced by winding the stacked body and then press-molding it.

### (2) Sample 2

In Sample 2, a wound electrode body was produced under the same conditions as in Sample 1, except that arrangement positions of the positive electrode starting end portion and the negative electrode starting end portion were different therefrom. Specifically, in Sample 2, a stacked body was prepared such that the positive electrode starting end portion and the negative electrode starting end portion overlap each other, and then the stacked body was wound to produce a tubular body. Then, press-molding was carried out so that the positive electrode starting end portion and the negative electrode starting end portion were disposed in the curved portion, thereby producing the wound electrode body. In addition, when a cross-section of the wound electrode body after production was confirmed, as shown in FIG. 12, both of the positive electrode starting end portion 110s and the negative electrode starting end portion 120s did not reach the curved portion 140r, and was disposed in the flat portion 140f near the curved portion 140r. Further, the arrangement positions of the positive electrode starting end portion 110s and the negative electrode starting end portion 120s were not aligned, and the negative electrode plate 220 slightly extended from the positive electrode starting end portion 210s.

### (3) Sample 3

In Sample 3, a wound electrode body was produced under the same conditions as in Sample 2, except that the position for press-molding was adjusted such that the positive electrode starting end portion and the negative electrode starting end portion were disposed in the flat portion. When a cross-section of the produced wound electrode body was confirmed, both of the positive electrode starting end portion and the negative electrode starting end portion were disposed in the flat portion, but similarly to Sample 2, the positions of the positive electrode starting end portion and the negative electrode starting end portion were not aligned, and the negative electrode plate slightly extended from the positive electrode starting end portion.

### (4) Sample 4

In Sample 4, a wound electrode body was also produced under the same conditions as in Sample 1, except that the arrangement positions of the positive electrode starting end portion and the negative electrode starting end portion were different therefrom. Specifically, in Sample 4, as shown in FIG. 9, the wound electrode body 40 was produced such that the electrode starting end stacked portion 48 in which the first region 17, the second region 27, and the third region 29 overlapped each other was formed in the flat portion 40f near the curved portion 40r2. Specifically, a stacked body in which the negative electrode plate 20 extended from the positive electrode starting end portion 10s was produced, and then the extended negative electrode plate 20 was bent such that a tip portion of the negative electrode plate 20 (corresponding to the third region 29) overlapped the positive electrode plate 10. Then, after the stacked body was wound, a tubular body was press-molded such that a bent position (a folded portion) of the negative electrode plate 20 was disposed in the curved portion, thereby producing the wound electrode body 40 having the structure shown in FIG. 9.

### 2. Evaluation Test

### (1) Evaluation of Surface Pressure Distribution

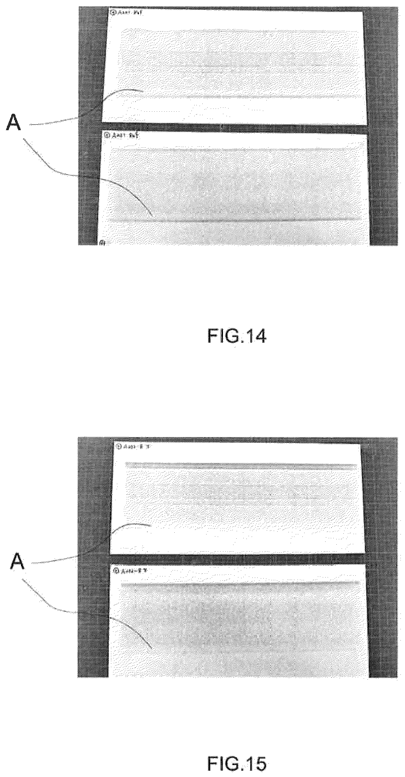

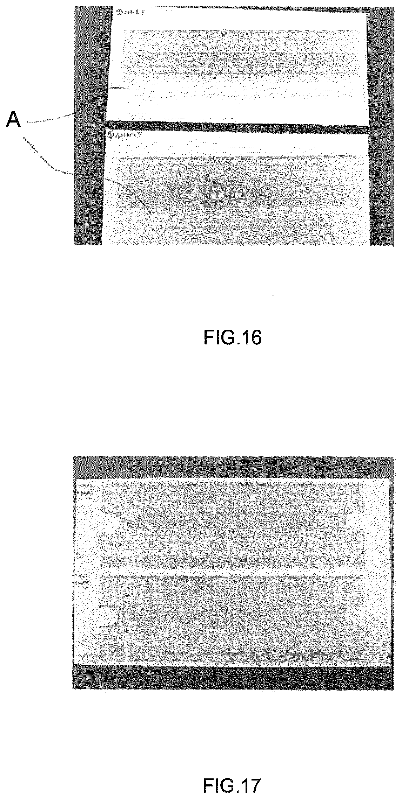

In the present evaluation, a surface pressure distribution when the flat portion of the wound electrode body of each sample was pressed was investigated. Specifically, first, a pair of pressure-sensitive papers (manufactured by Fuji Film Co., Ltd.) were attached to sandwich the flat portion of the wound electrode body, which is a test target. Then, using a pressing jig having a flat pressing surface, pressing was performed to sandwich the flat portion of the wound electrode body. A pressure in this case was set to 125 kN, and a pressing time was set to 3 seconds. After that, the pressure-sensitive papers were removed from the wound electrode body, and discolored portions (pressed portions) of the pressed papers were visually observed. The results are shown in FIGS. 14 to 17. FIG. 14 is a photograph of the pressure-sensitive papers showing the results of evaluating the surface pressure distribution in Sample 1. FIG. 15 is a photograph of the pressure-sensitive papers showing the results of evaluating the surface pressure distribution in Sample 2. FIG. 16 is a photograph of the pressure-sensitive papers showing the results of evaluating the surface pressure distribution in Sample 3. FIG. 17 is a photograph of the pressure-sensitive papers showing the results of evaluating the surface pressure distribution in Sample 4.

### (2) Evaluation of Li Precipitation Resistance

In the present evaluation, lithium ion secondary batteries using the wound electrode bodies of each sample were constructed, and Li precipitation resistances of the lithium ion secondary batteries were evaluated. Specifically, in each sample, three wound electrode bodies were produced, and each wound electrode body was connected to an electrode terminal and then housed in the battery case. Then, after a non-aqueous electrolytic solution was injected into the battery case, the battery case was sealed to construct the lithium ion secondary battery for testing. Also, the non-aqueous electrolytic solution used in the present evaluation was an electrolytic solution in which a supporting salt (LiPF₆) was dissolved at a concentration of 1 mol/L in a non-aqueous solvent in which EC, DMC, and EMC were mixed at a volume ratio of 3:4:3.

Then, the constructed battery for testing was disposed in an environment of 20°C, and a charging and discharging cycle of repeating CC charging and CC discharging under predetermined conditions was repeated for 1000 cycles. Further, in the CC charging in the present evaluation test, the battery was charged at a charging rate of 1 C for 100 seconds. On the other hand, in the CC discharging, discharging was performed at a discharging rate of 1 C for 100 seconds. Then, after the above-mentioned charging and discharging cycle was performed, SOC was discharged until it became 0%, the test battery was disassembled, and the negative electrode plate was recovered. Then, it was visually observed whether or not the metal Li was precipitated on the surface of the negative electrode active material layer.

### (3) Test Results

First, as shown in FIGS. 14 to 16, as a result of performing the surface pressure distribution evaluation, in Samples 1 to 3, it was confirmed that an unpressed region A in which the pressure-sensitive papers after testing were hardly discolored (no pressure was applied) was generated. Specifically, in Samples 1 to 3, it was found that a linear unpressed region A along the winding axis of the wound electrode body was generated in the flat portion near the curved portion. In addition, as a result of performing the Li precipitation resistance evaluation, the metal Li was precipitated on the surface of the negative electrode active material layer in the vicinity of the unpressed region A. In particular, in Sample 3, a wider unpressed region A was generated as compared with Samples 1 and 2, and more metal Li precipitation was confirmed.

On the other hand, as shown in FIG. 17, in the surface pressure distribution evaluation for Sample 4, a sufficient pressure was applied to the flat portion in the vicinity of the curved portion, and the unpressed region A as in Samples 1 to 3 was not generated. In addition, as a result of the Li precipitation resistance evaluation, the precipitation of metal Li was hardly confirmed in Sample 4. From the above results, as shown in FIG. 9, it was found that the arrangement positions of the positive electrode starting end portion 10s and the negative electrode starting end portion 20s were adjusted such that the electrode starting end stacked portion 48 in which the first region 17 of the positive electrode plate 10, the second region 27 of the negative electrode plate 20, and the third region 29 of the negative electrode plate 20 overlapped each other was formed, and thus the precipitation of metal Li could be appropriately inhibited.

The present disclosure has been described in detail above, but the above description is merely an example. That is, the technique disclosed herein includes various modifications and changes of the above-mentioned specific examples.

## Claims

1. A secondary battery (100) comprising:
a flat wound electrode body (40) in which a positive electrode plate (10) and a negative electrode plate (20) are wound with a separator (30) interposed therebetween; and
a battery case (50) that houses the wound electrode body (40), wherein
the wound electrode body (40) includes a pair of curved portions (40r) each having a curved outer surface, and a flat portion (40f) having a flat outer surface connecting the pair of curved portions (40r),
one end portion of the positive electrode plate (10) in a longitudinal direction thereof is disposed as a positive electrode starting end portion (10s) on an inner side of the wound electrode body (40), and the other end portion thereof is disposed as a positive electrode terminating end portion (10e) on an outer side of the wound electrode body (40),
one end portion of the negative electrode plate (20) in the longitudinal direction is disposed as a negative electrode starting end portion (20s) on the inner side of the wound electrode body (40), and the other end portion thereof is disposed as a negative electrode terminating end portion (20e) on the outer side of the wound electrode body (40),
the positive electrode starting end portion (10s) includes a first region (17) extending along the flat portion (40f),
the negative electrode starting end portion (20s) includes a second region (27) extending along the flat portion (40f), a folded portion (28) folded back from an end portion of the second region (27) along the curved portion (40r), and a third region (29) extending along the flat portion (40f) from an end portion of the folded portion (28), and
the wound electrode body (40) includes an electrode starting end stacked portion (48) in which the first region (17), the second region (27), and the third region (29) overlap each other in a thickness direction thereof.

2. The secondary battery (100) according to claim 1, wherein a length of the electrode starting end stacked portion (48) in the longitudinal direction of the positive electrode plate (10) is 0.5 mm to 10 mm.

3. The secondary battery (100) according to claim 1 or 2, wherein a plurality of the wound electrode bodies (40) are housed in the battery case (50), each of the plurality of wound electrode bodies (40) has a different length of the electrode starting end stacked portion (48) in the longitudinal direction of the positive electrode plate (10).

4. The secondary battery (100) according to any one of claims 1 to 3, wherein the positive electrode starting end portion (10s) is disposed at a position closer to one curved portion (40r2) of the pair of curved portions (40r), and the positive electrode terminating end portion (10e) is disposed at a position closer to the other curved portion (40r1) than the positive electrode starting end portion (10s).

5. The secondary battery (100) according to claim 4, wherein at least one of the positive electrode terminating end portion (10e) and the negative electrode terminating end portion (20e) is disposed in the other curved portion (40r1).

6. The secondary battery (100) according to any one of claims 1 to 5, wherein
the separator (30) includes a porous base material layer made of a resin, and a porous surface layer that is formed on a surface of the porous base material layer and contains ceramic particles and a binder, and
a porosity of the porous surface layer in a region not facing the positive electrode plate (10) and the negative electrode plate (20) is 30% to 60%.

7. The secondary battery (100) according to claim 6, wherein a thickness of the porous surface layer in the separator (30) interposed between the positive electrode plate (10) and the negative electrode plate (20) is equal to or less than 60% of a thickness of the porous surface layer in the region not facing the positive electrode plate (10) and the negative electrode plate (20).

8. The secondary battery (100) according to any one of claims 1 to 7, wherein the wound electrode body (40) is produced by winding a stacked body in which a first separator (32), the negative electrode plate (20), a second separator (34), and the positive electrode plate (10) are stacked in order.

9. The secondary battery (100) according to claim 8, wherein a first extension portion (32e) extending from the negative electrode starting end portion (20s) is formed at one end portion of the first separator (32) in the longitudinal direction, and a second extension portion (34e) extending from the negative electrode starting end portion (20s) is formed at one end portion of the second separator (34) in the longitudinal direction.

10. The secondary battery (100) according to claim 9, wherein each of the first extension portion (32e) and the second extension portion (34e) is folded back along at least one of the pair of curved portions (40r) to form a separator stacked portion (49) in which only the first separator (32) and the second separator (34) are stacked.

11. The secondary battery (100) according to claim 10, wherein the first separator (32) is stacked in three or more layers and the second separator (34) is stacked in two or more layers in the separator stacked portion (49).

12. The secondary battery (100) according to any one of claims 9 to 11, wherein an adhesive layer is provided on at least one surface of each of the first separator (32) and the second separator (34), a mesh-shaped protruding portion is formed on a surface of the adhesive layer in a plan view.

13. The secondary battery (100) according to any one of claims 1 to 12, wherein the separator (30) is interposed between the second region (27) and the third region (29) in the electrode starting end stacked portion (48), and a distance between the second region (27) and the third region (29) in the thickness direction of the wound electrode body (40) is smaller than a thickness of the negative electrode plate (20).

14. The secondary battery (100) according to claim 13, wherein a value obtained by subtracting the total thickness of the separator (30) interposed between the second region (27) and the third region (29) from the distance between the second region (27) and the third region (29) in the thickness direction of the wound electrode body (40) is 50 µm or less.

15. The secondary battery (100) according to claim 13 or 14, wherein three or more layers of the separators (30) are interposed between the second region (27) and the third region (29) of the negative electrode starting end portion (20s).
